# EUROPÄISCHE PATENTSCHRIFT

(11) **EP 3 864 262 B1**
(45) Veröffentlichungstag und Bekanntmachung des Hinweises auf die Patenterteilung: **12.07.2023**
(21) Anmeldenummer: 19805896.8
(22) Anmeldetag: 11.10.2019
(51) Int. Cl.: F01N 3/20, F01N 3/28, F01N 13/18, H05B 3/50

(54) **VORRICHTUNG ZUR ABGASBEHANDLUNG**
APPARATUS FOR EXHAUST GAS TREATMENT
DISPOSITIF POUR TRAITEMENT DES GAZ D'ÉCHAPPEMENT

(30) Priorität: 11.10.2018 DE 102018217437
(43) Veröffentlichungstag der Anmeldung: 18.08.2021
(73) Patentinhaber: Vitesco Technologies GmbH, 93055 Regensburg (DE)
(72) Erfinder: HIRTH, Peter, 81737 München (DE); RINGS, Florian, 81737 München (DE)
(74) Vertreter: Vitesco Technologies
(86) Internationale Anmeldenummer: PCT/EP2019/077571
(87) Internationale Veröffentlichungsnummer: WO 2020/074692

(56) Entgegenhaltungen:
- WO-A1-92/02714
- DE-A1- 4 243 904
- DE-A1- 4 307 431
- DE-A1- 19 533 088
- DE-A1-102015 111 913
- DE-U1- 8 905 073
- JP-A- H06 341 316

## Beschreibung

Die vorliegende Erfindung betrifft eine Vorrichtung zur elektrischen Kontaktierung für einen elektrisch beheizten Katalysator in einer Abgasanlage für ein Kraftfahrzeug mit einem Verbrennungsmotor zur Abgasbehandlung, die eine Außenwand aufweist, die eine Öffnung aufweist, um eine oder mehrere Leiterbahnen, die innerhalb eines von der Außenwand umgebenen Innenraums angeordnet sind, durch die Außenwand hindurch elektrisch zu kontaktieren.

Derartige Vorrichtungen sind grundsätzlich bekannt, beispielsweise aus der EP 2 175 115 A1. Die dort offenbarte Vorrichtung zur Abgasbehandlung weist eine Sensorfolie auf, die mit einem Leiterelement ausgeführt ist. Ein Gehäuse der Vorrichtung weist eine Öffnung zur Kontaktierung des Leiterelements auf. In Ausführungsformen ist vorgesehen, die Öffnung zur Kontaktierung mehrerer Leiterelemente zu nutzen. Die Vorrichtung weist auf einer Außenfläche des Gehäuses eine metallische Hülse auf, die um die Öffnung herum angeordnet ist, beispielsweise mit einer gasdichten Schweißnaht. Die Hülse kann innen mit einer Isolierung ausgekleidet sein und eine Elektrode zur Kontaktierung des Leiterelements sicher aufnehmen. So soll insbesondere auch gewährleistet sein, dass kein Abgas durch die Hülse hindurch nach außen gelangt.

Aus dem Stand der Technik sind ebenfalls elektrisch beheizbare Katalysatoren bekannt, die metallische Blechlagen aufweisen, die elektrisch isoliert an einem Stützsubstrat angebracht sind.

Außerdem sind elektrisch beheizbare Trägersubstrate bekannt, die mittels isoliertem Heizleiter an den Stirnseiten eines in dem Innenraum angeordneten Wabenkörpers der Vorrichtung ausgeführt sind.

Eine weitere bekannte Möglichkeit, ein Substrat zu beheizen, besteht darin, einen möglichst großen Teil einer inneren Katalysatorfläche mittels Leiterbahnen zu versehen, welche auf eine Glatt-/Welllage der Vorrichtung aufgebracht werden. Mittels der Leiterbahnen kann elektrisch annähernd das komplette Trägervolumen beheizt werden.

Die DE 43 07 431 A1 offenbart einen elektrisch beheizbaren, von einem Fluid durchströmbarer Wabenkörper, der aus mehreren voneinander elektrisch getrennten Teilbereichen besteht und insbesondere zur Verwendung als Trägerkörper für beheizbare katalytische Konverter bei Verbrennungsmotoren verwendet werden kann. Durch den Wabenkörper kann ein elektrischer Strom auf einem gewundenen Pfad um isolierende Stellen von Teilbereich zu Teilbereich fließen. Der Wabenkörper weist dabei in den Bereichen, in denen der elektrische Strom umgelenkt wird, zusätzliche elektrische Leiterelemente aus einem Material größerer spezifischer elektrischer Leitfähigkeit und größerer mechanischer Festigkeit als dem der Teilbereiche auf.

Die DE 89 05 073 U1 offenbart einen elektrisch leitfähigen Wabenkörper, insbesondere als Trägerkörper für Abgaskatalysatoren, aus gewickelten, gestapelten oder anderweitig geschichteten Lagen zumindest teilweise strukturierter hochtemperaturkorrosionsfester Bleche, die eine Vielzahl von für ein fluid durchströmbaren Kanälen bilden.

Die JP H06 341316 A offenbart einen wabenförmigen Träger, der durch Wickeln von Metallfolien um eine Mittelelektrode gebildet wird. Der Träger wird derart gelagert und montiert, dass er in inneren Kontakt mit einem Außenzylinder gebracht wird, der die andere Elektrode bildet. Die Mittelelektrode wird so angebracht, dass sie den Außenzylinder durchdringt und nach außen vorsteht. Der Katalysator wird erhitzt, indem ein elektrischer Strom zwischen dem vorstehenden Teil der Mittelelektrode und dem Außenzylinder angelegt wird.

Die DE 195 33 088 A1 offenbart eine elektrisch isolierende Durchführung wenigstens eines elektrischen Leiters durch einen metallischen Mantel eines Abgassystems einer Verbrennungskraftmaschine, insbesondere eines elektrisch beheizbaren katalytischen Konverters. Der Mantel weist im Bereich der Durchführung eine Hülse aus einem metallischen Werkstoff auf. Die Hülse ist mit dem Mantel verschweißt. Durch die Hülse erstreckt sich der Leiter. Auf der Hülse ist eine Opferelektrode angeordnet.

Die DE 42 43 904 A1 offenbart einen Katalysator für die Reinigung von Abgas aus Verbrennungsprozessen, vorzugsweise von Verbrennungsmotoren mit einem Gehäuse und einem darin angeordneten Träger, vorzugsweise mit einer Vielzahl von zueinander parallel verlaufenden, wabenartig ausgebildeten Kanälen, die eine katalytisch gegenüber dem Abgas wirksame Schicht, vorzugsweise Washcoat, zum Beispiel Aluminiumoxid mit eingelagerten Teilchen aus Platin und/oder Platinmetallen aufweisen. Dabei weist zumindest ein Teilbereich der Oberfläche des Trägers zumindest eine elektrisch leitende Widerstandsheizschicht und gegebenenfalls eine damit verbundene elektrisch leitende Anschlussschicht auf, die auf dem Träger aus einem metallischen Werkstoff in Form einer Anzahl von voneinander vorzugsweise mittels eines gewellten Blechs unter Bildung der Kanäle beabstandet angeordneten Metallfolien aufgebracht ist.

Die WO 92/02714 A1 offenbart einen elektrisch beheizbaren Wabenkörper, insbesondere einen Katalysator-Trägerkörper, mit inneren Tragstrukturen. Der Wabenkörper ist elektrisch leitfähig und daher unter Ausnutzung des ohmschen Widerstandes beheizbar.

Die DE 10 2015 111913 A1 offenbart eine elektrisch beheizte Katalysatorvorrichtung, welche die nachfolgenden Elemente umfasst: einen Träger, der ausgestaltet ist, um einen Katalysator zu tragen; ein Paar Stromdiffusionsschichten, die auf einer äußeren Randfläche des Trägers ausgebildet sind und einander gegenüberliegen; sowie Leitungselemente, die an jeder der Stromdiffusionsschichten angebracht sind, wobei der Träger über die Leitungselemente elektrisch beheizt wird. Jede der Stromdiffusionsschichten ist derart ausgebildet, dass sie in eine axiale Richtung des Trägers in eine Mehrzahl von Bereichen unterteilt ist.

Bei herkömmlichen beheizbaren Katalysatoren können einige Probleme beobachtet werden. Beispielsweise kann manchmal nicht die gesamte Katalysatorfläche beheizt werden. Für 48-Volt-Anwendungen werden manchmal höhere als übliche Widerstände benötigt und diese sind bei kleinen Substratgrößen technisch manchmal nicht umsetzbar, da eine Mindestmateriallänge des Substrats vorhanden sein muss.

Weiterhin kann es Probleme beim Einbringen eines isolierten Heizleiters geben. Da der Heizleiter isoliert ist, kann eine Temperaturverteilung verhältnismäßig schlecht sein. Im Bereich des Heizleiters können zudem verschlossene Zellen auftreten oder es kann auch ein erhöhter Gegendruck auftreten.

Schließlich kann es auch beim Aufheizen relativ großer Katalysatorflächen zu Problemen kommen. Die elektrische Kontaktierung durch Herausführen jeder einzelnen Leiterbahn von Heizelementen durch die Außenwand der Vorrichtung kann sehr aufwändig sein. Weiter ist eine thermo-mechanisch stabile Trägerfolienbeschichtung oft mit einem großen Prozessaufwand verbunden. Die Dichtigkeit der Vorrichtung, beispielsweise hinsichtlich austretender Abgase, kann durch das Herausführen der vielen einzelnen elektrischen Kontakte ebenfalls beeinträchtigt sein.

Eine Aufgabe der Erfindung besteht darin, eine Vorrichtung zur Abgasbehandlung bereitzustellen, die gegenüber dem Stand der Technik verbessert ist. Insbesondere soll die Dichtigkeit der Vorrichtung verbessert sein.

Die Aufgabe der Erfindung wird gelöst durch eine Vorrichtung zur elektrischen Kontaktierung für einen elektrisch beheizten Katalysator in einer Abgasanlage für ein Kraftfahrzeug mit einem Verbrennungsmotor zur Abgasbehandlung der eingangs genannten Art, bei der die Öffnung in einem von dem Innenraum nach außen abstehenden Vorsprung angeordnet ist, der einstückig mit der Außenwand gebildet ist, wobei der Vorsprung einen Hohlraum zwischen der Außenwand und einem Leiterbahnträger innerhalb des Innenraums ausbildet und in dem Hohlraum zwischen der Öffnung und dem Leiterbahnträger eine Elektrode angeordnet ist, um die eine oder die mehreren Leiterbahnen elektrisch zu kontaktieren, wobei die elektrische Kontaktierung mehrere der Leiterbahnen aufweist und auf der Elektrode nebeneinander mehrere elektrisch leitfähige Kontaktbereiche bereitgestellt sind, von denen jeweils einer der Kontaktbereiche jeweils einer der mehreren Leiterbahnen zur elektrischen Kontaktierung zugeordnet ist, wobei den mehreren Kontaktbereichen auf der Elektrode jeweils ein Isolierbereich zwischengeordnet ist.

Diese Lösung hat den Vorteil, dass auf eine aus dem Stand der Technik bekannte Schweißnaht zwischen der Außenwand und der davon separaten metallischen Hülse verzichtet werden kann. Die Schweißnaht kann beispielsweise eine potentielle Leckstelle für Abgase nach außen darstellen. Durch den einstückig gebildeten Vorsprung, der die Hülse ersetzt, wird die separate Hülse und damit die Schweißnaht zwischen der Hülse und der Außenwand überflüssig. Auf diese Weise lassen sich zudem Bauteile, Herstellungsschritte und damit auch Herstellungskosten einsparen.

Vorzugsweise bildet der Vorsprung, welcher vorzugsweise als Sicke ausgebildet ist, einen Hohlraum zwischen der Außenwand und einem Leiterbahnträger innerhalb des Innenraums aus. Vorzugsweise weist die Sicke zwei parallele Seitenwände auf. Der Leiterbahnträger ist vorzugsweise eine Folie. Der Hohlraum ist in dem Innenraum gebildet und wird vorzugsweise durch die Seitenwände und die Deckwand der Sicke und durch den Leiterbahnträger begrenzt. Solch ein Hohlraum kann vorteilhaft sein, um Bauraum zur bequemen elektrischen Kontaktierung der Leiterbahnen zu schaffen.

In dem Hohlraum ist vorzugsweise zwischen der Öffnung und dem Leiterbahnträger eine Elektrode angeordnet, um die eine oder die mehreren Leiterbahnen zu kontaktieren. So kann der durch den Hohlraum geschaffene Bauraum genutzt werden. Bevorzugt ist, dass in dem Innenraum, insbesondere in dem Hohlraum, eine oder mehrere durch die Außenwand hindurch elektrisch kontaktierbare Elektroden vorgesehen sind, von denen jede zwei oder mehr der Leiterbahnen in dem Innenraum elektrisch kontaktiert.

Sind mehrere Elektroden vorgesehen, so ist bevorzugt, dass zwei oder mehr der Elektroden durch eine selbe Öffnung in der Außenwand hindurch elektrisch kontaktierbar sind, wobei die Öffnung radial in der Außenwand über einem Bereich des Innenraums angeordnet ist, in dem die Leiterbahnen kontaktierbar sind. So kann die Anzahl der Öffnungen reduziert sein, was sich positiv auf die Dichtigkeit der Vorrichtung und auf die Herstellungskosten auswirken kann. Für die elektrische Kontaktierung der mehreren Elektroden ist in anderen Ausführungsformen jedoch für jede Elektrode eine separate Öffnung vorgesehen, sodass dann jede Elektrode durch eine ihr zugeordnete Öffnung durch die Außenwand hindurch elektrisch kontaktierbar ist.

Die Elektrode ist vorzugsweise so ausgelegt, dass in Verbindung mit dem Enden der einen oder der mehreren Leiterbahnen ein Querschnitt der Elektrode, also eine Materialdicke, angepasst ist. Dies ist vorteilhaft, um eine konstante Stromdichte innerhalb der Elektrode sicherzustellen. Andernfalls kann es dazu kommen, dass durch eine abnehmende/ zunehmende Stromdichte unerwünschte kalte/warme Stellen entstehen. Die erforderliche Änderung der Materialdicke ist abhängig von einer Stromaufnahme der jeweiligen Leiterbahn. Vorzugsweise variiert also der Querschnitt der Elektrode abschnittsweise in Abhängigkeit von der Stromaufnahme der dort jeweils kontaktierten Leiterbahn. Die Elektrode weist vorzugsweise in radialer Richtung der Außenwand eine Dicke auf, die an den erwarteten Stromfluss angepasst ist. Vorzugsweise ist die Elektrode an ihrer dicksten Stelle um mehr als einen Faktor 2 dicker als an der dünnsten Stelle, nochmal bevorzugt um mehr als einen Faktor 3, nochmal bevorzugt um, mehr als einen Faktor 4, besonders bevorzugt um mehr als einen Faktor 5. So kann an der dicksten Stelle ein wesentlich größerer Stromfluss als an der dünnsten Stelle bewältigt werden, ohne dass ein wesentlicher Temperaturunterschied auftritt.

In einigen Ausführungsformen sind auf der Elektrode nebeneinander mehrere elektrisch leitfähige Kontaktbereiche bereitgestellt. Bevorzugt ist, dass jeweils einer der Kontaktbereiche jeweils einer von mehreren Leiterbahnen zur elektrischen Kontaktierung zugeordnet ist. Besonders vorzugsweise ist den mehreren Kontaktbereichen auf der Elektrode jeweils ein Isolierbereich zwischengeordnet. Dies ermöglicht, eine elektrische Kontaktierung nur auf die Kontaktbereiche zu beschränken und Kontaktflächen der Leiterbahnen im Innenraum flächig anliegend oder anstoßend an die Kontaktbereiche der Elektrode zu platzieren. Andere Elemente im Innenraum können dann an den Isolierbereichen der Elektrode flächig anliegen oder anstoßen, ohne elektrisch von außerhalb der Vorrichtung durch die Elektrode kontaktiert zu werden. Dies erlaubt einen kompakten Aufbau der Vorrichtung. Vorzugsweise ist die Elektrode als Stromschiene ausgeführt und rechteckige Kontaktbereiche wechseln sich entlang der Erstreckungsrichtung der Stromschiene mit rechteckigen Isolierbereichen ab. Es ist zweckmäßig, genauso viele Kontaktbereiche wie zu kontaktierende Leiterbahnen vorzusehen.

Bevorzugte Ausführungsformen der Erfindung sind Teil der abhängigen Patentansprüche.

Bevorzugt ist, dass der Vorsprung als eine Sicke in der Außenwand gebildet ist. Eine Sicke kann auf einfache Weise in die Außenwand eingearbeitet werden, insbesondere, wenn die Außenwand kreiszylindrisch geformt ist. Vorzugsweise kann die Sicke eine Breite und eine Tiefe aufweisen, die eine bequeme Kontaktierung des oder der Leiter bzw. Halbleiter durch die Öffnung hindurch zulässt. Die Öffnung ist vorzugsweise an einer Oberseite der Sicke angeordnet, die Öffnung kann aber in anderen Ausführungsformen alternativ in einer Seitenwand der Sicke angeordnet sein. Die Öffnung kann als Bohrung ausgeführt sein. Vorzugsweise dient die Öffnung dazu, einen Plus-Pol einer oder mehrerer der Leiterbahnen zu kontaktieren. In manchen Ausführungsformen dient die Öffnung jedoch dazu, sowohl den Plus-Pol als auch den Minus-Pol einer oder mehrerer der Leiterbahnen zu kontaktieren. Vorzugsweise hat die Sicke eine Deckwand, die die Seitenwände verbindet und parallel zu Abschnitten der Außenwand verläuft, die an die beiden Seitenwände anschließen. Bevorzugt ist, dass die Seitenwände im Wesentlichen senkrecht zur Deckwand verlaufen. Besonders bevorzugt ist, dass die Öffnung in der Deckwand gebildet ist.

Vorzugsweise ist die Elektrode als Stromschiene ausgebildet, die sich vorzugsweise entlang mindestens eines Abschnitts der Außenwand erstreckt, um mehrere der Leiterbahnen zu kontaktieren. So kann mit einer einzigen Elektrode eine Vielzahl von Leiterbahnen kontaktiert werden, sodass nicht für jede Leiterbahn eine separate Elektrode benötigt wird. In bevorzugten Ausführungsformen ist die Elektrode als streifenartige Stromschiene ausgebildet. Vorzugsweise erstreckt sich die Stromschiene entlang mindestens eines Abschnitts des Vorsprungs, vorzugsweise der Sicke. Ist die Elektrode als Stromschiene ausgebildet, können auf besonders einfache Weise mehrere Leiterbahnen einfach über die Elektrode elektrisch kontaktiert werden, weil sie entlang ihrer Erstreckungsrichtung ausreichend Platz dafür bietet. Die Elektrode kann also insbesondere dann als Stromschiene ausgeführt sein, wenn mehrere Leiterbahnen für die Kontaktierung durch die Elektrode vorgesehen sind. Die Stromschiene ist vorzugsweise mit einem selben Biegeradius gekrümmt wie die Außenwand, sodass der Streifen dafür eingerichtet ist, der Außenwand im Innenraum im Wesentlichen mit gleichbleibendem Abstand in einer Umfangsrichtung zu folgen.

Vorzugsweise ist eine Durchtrittsfläche der Öffnung größer als eine Flächenausdehnung der Elektrode hinsichtlich einer Fläche, die dem Innenraum zugewandt ist. Insbesondere kann die Ausdehnung der Öffnung in Umfangsrichtung der Außenwand größer als eine Länge der Elektrode in ihrer Erstreckungsrichtung sein, vorzugsweise wenn die Elektrode als Stromschiene ausgeführt ist. So kann die Elektrode einfach durch die Öffnung hindurch in den Innenraum eingesetzt werden.

In alternativen Ausführungsformen ist die Elektrode als Kabelanordnung ausgeführt, die einen eingangsseitigen Leiter zur elektrischen Kontaktierung durch die Außenwand hindurch und eine Vielzahl von ausgangsseitigen Leitern zur elektrischen Kontaktierung von mehreren der Leiterbahnen in dem Innenraum aufweist. Die Kabelanordnung verzweigt also den eingangsseitigen Leiter auf die mehreren ausgangsseitigen Leiter. Vorzugsweise sind genauso viele ausgangsseitige Leiter vorhanden wie in dem Innenraum elektrisch zu kontaktierende Leiterbahnen.

Vorzugsweise ist die Länge der Elektrode größer oder gleich die Hälfte eines radialen Umfangs der Außenwand, insbesondere, wenn die Außenwand kreiszylindrisch geformt ist. Vorzugsweise ist die minimale Länge der Elektrode Lₘᵢₙ = 0,5 * π * D, wobei D für den Durchmesser der kreiszylindrischen Außenwand steht. Die Elektrode ist vorzugsweise aus einem elektrisch leitfähigen Material gebildet, das einen spezifischen Widerstand ρ hat, der zwischen 0 und 3 (Ohm*mm²)/m liegt. Vorzugsweise ist ρ ≤ 1,5 (Ohm*mm²)/m. So kann eine besonders gute elektrische Leitfähigkeit der Elektrode erreicht werden.

Bevorzugt ist, dass die Elektrode über eine oder mehrere elektrisch isolierende Stützen an der Außenwand befestigt ist. In manchen Ausführungsformen sind die elektrisch isolierenden Stützen als Stützstifte ausgeführt. In manchen Ausführungsformen sind die elektrisch isolierenden Stützen als elektrisch isolierte Lötverbindung zur Außenwand, insbesondere zwischen Elektrode und Außenwand, ausgeführt. Vorzugsweise ist die Stütze als Stützstift ausgeführt. Es können mehrere Stützstifte vorgesehen sein, die in gleichem Abstand voneinander entlang einer Erstreckungsrichtung der Elektrode angeordnet sind, insbesondere zwei bis acht Stützstifte, vorzugsweise fünf. Der Stützstift weist vorzugsweise zwei voneinander elektrisch isolierte Teilstifte auf. Bevorzugt ist, dass ein erster Teilstift in dem zweiten Teilstift koaxial fest aufgenommen ist und zwischen den beiden Teilstiften ein Isolationsmaterial zur elektrischen Isolierung eingebracht ist. Der erste Teilstift kann dann an der Außenwand befestigt sein und der zweite Teilstift an der Elektrode oder umgekehrt. So wird eine stabile mechanische Verbindung zwischen Elektrode und Außenwand erreicht und eine unerwünschte elektrische Kontaktierung zwischen Elektrode und Außenwand wird verhindert. In alternativen Ausführungsformen sind eine oder mehrere der elektrisch isolierenden Stützen jeweils nicht als Stützstift, sondern als elektrisch isolierte Lötverbindung zur Außenwand, insbesondere zwischen Elektrode und Außenwand, ausgeführt. Einige Ausführungsformen sehen vor, dass eine oder mehrere der elektrisch isolierenden Stützen als Stützstift ausgeführt sind und zugleich eine oder mehrere weitere elektrisch isolierende Stützen als elektrisch isolierte Lötverbindung zur Außenwand, insbesondere zwischen Elektrode und Außenwand, ausgeführt sind.

Im Innenraum sind in Ausführungsformen in bekannter Weise gewickelte Glattlagen angeordnet, die sich mit gewickelten Welllagen abwechseln. Vorzugsweise ist mindestens eine der Glattlagen der Leiterbahnträger. Besonders bevorzugt ist, dass mindestens zwei der Glattlagen die Leiterbahnträger sind und jeweils eine zu kontaktierende Leiterbahn tragen. Um die gewünschte elektrische Kontaktierung der Leiterbahnen zu erreichen und unerwünschte elektrische Kontaktierungen, insbesondere der Welllagen, zu vermeiden, können die Glattlagen und die Welllagen so angeordnet sein, dass nur die nicht isolierten Kontaktflächen der Glattlagen mit den elektrisch leitfähigen Kontaktbereichen der Elektrode in Kontakt stehen. Alle nicht elektrisch zu kontaktierenden Elemente im Innenraum stehen dann allenfalls mit den Isolierbereichen der Elektrode in Kontakt, sodass eine unerwünschte elektrische Kontaktierung vermieden wird.

Bevorzugt ist, dass genau eine elektrische Durchführung die Öffnung durchtritt und elektrisch mit der Elektrode verbunden ist. Die elektrische Durchführung ist vorzugsweise dafür angeordnet, die Elektrode von außerhalb der Außenwand durch die Öffnung hindurch elektrisch zu kontaktieren. Mit anderen Worten heißt das, dass genau eine elektrische Durchführung über die Elektrode mit allen zu kontaktierenden Leiterbahnen elektrisch verbunden ist. So kann der Verbindungsaufwand nach außerhalb der Außenwand reduziert sein, weil eine einzige Durchführung über die Elektrode mit mehreren Leiterbahnen elektrisch kontaktiert. Eine bevorzugte elektrische Durchführung ist ein Bolzen, insbesondere ein zylindrischer Bolzen. Die elektrische Durchführung hat vorzugsweise einen Durchmesser von 3 - 15 mm, besonders vorzugsweise 8 mm. Die elektrische Durchführung ist vorzugsweise dafür eingerichtet, einen Strom von zwischen 10 - 500 Ampere, vorzugsweise mehr als 200 Ampere und/oder gleich oder weniger als 350 Ampere zu leiten, ohne sich merklich zu erwärmen. Die elektrische Durchführung umfasst vorzugsweise einen Durchführungsleiter, eine Durchführungshülse und eine Durchführungsisolation, die die Durchführungshülse elektrisch von dem Durchführungsleiter isoliert. Die Durchführungsisolation umgibt den Durchführungsleiter radial und hat eine Dicke von vorzugsweise 0,5 - 1,5 mm. Der Durchmesser der elektrischen Durchführung entspricht vorzugsweise im Wesentlichen einem Durchmesser der Öffnung, sodass die elektrische Durchführung in die Öffnung passgenau eingesetzt ist.

In Ausführungsformen durchtreten genau zwei elektrische Durchführungen die Öffnung, wobei eine davon die elektrische Durchführung ist, die die Elektrode kontaktiert, und die andere eine weitere elektrische Durchführung ist, die eine weitere Elektrode kontaktiert. Die Elektrode kontaktiert vorzugsweise den Plus-Pol der Leiterbahn elektrisch. Die weitere Elektrode kontaktiert vorzugsweise den Minus-Pol der Leiterbahn elektrisch.

In manchen Ausführungsformen, die mehrere Elektroden, insbesondere die Elektrode und die weitere Elektrode, aufweisen, ist vorgesehen, dass zur Kontaktierung jeder Elektrode jeweils genau eine elektrische Durchführung die Außenwand durchtritt und elektrisch mit der jeweils zugeordneten Elektrode verbunden ist, um die jeweils zugeordnete Elektrode durch die Außenwand hindurch elektrisch zu kontaktieren. So reicht pro Elektrode genau eine elektrische Durchführung zur elektrischen Kontaktierung aus, sodass die Anzahl der elektrischen Durchführungen durch die Außenwand reduziert sein kann.

Vorzugsweise nimmt der Vorsprung einen Schichtstapel auf, insbesondere zwischen der Außenwand und dem Leiterbahnträger, besonders vorzugsweise in dem Hohlraum. In dem Schichtstapel ist vorzugsweise die Elektrode angeordnet. Bevorzugt ist, dass die elektrische Durchführung in eine Eindringtiefe in den Schichtstapel eindringt, um die Elektrode elektrisch zu kontaktieren.

Angrenzend an die Außenwand ist als Bestandteil des Schichtstapels vorzugsweise eine elektrisch isolierende Isolationsschicht angebracht, insbesondere in dem Hohlraum. Die Isolationsschicht kann durch eines aus der Gruppe bestehend aus CVD/PVD-Beschichtung, Aerosolabscheidung und Flammspritzen oder eine weitere geeignete Beschichtungsweise aufgebracht sein. Die Isolationsschicht weist eine Dicke auf, die an eine erwartete maximale zu kontaktierende Spannung angepasst ist, um einen geeigneten Isolationswiderstand zu bilden. Angrenzend an die Isolationsschicht ist vorzugsweise eine Metallisierungsschicht aufgebracht, insbesondere durch Aufdampfen einer Dünnschicht. Angrenzend an die Metallisierungsschicht ist vorzugsweise eine erste Lotschicht angebracht. Angrenzend an die erste Lotschicht ist vorzugsweise die Elektrode angebracht. Die Elektrode ist in Ausführungsformen durch Siebdruck oder ähnliches aufgetragen. Angrenzend an die Elektrode ist vorzugsweise eine zweite Lotschicht angebracht, insbesondere angrenzend an jeden Kontaktbereich. Die zweite Lotschicht grenzt vorzugsweise weiterhin an die elektrisch zu kontaktierende Leiterbahn an, die auf dem Leiterbahnträger angebracht sein kann. In einer besonders bevorzugten Ausführungsform ist der Schichtstapel also, in einer Abfolge ausgehend von der Außenwand hin zu dem Leiterbahnträger, aus der Isolationsschicht, der Metallisierungsschicht, der ersten Lotschicht, der Elektrode und der zweiten Lotschicht gebildet.

Bevorzugt ist, dass die Elektrode über die erste Lotschicht mit der Metallisierungsschicht und/oder über die zweite Lotschicht mit der Leiterbahn stoffschlüssig verbunden ist, vorzugsweise durch Hartlöten, insbesondere mittels eines Lötmittels, besonders vorzugsweise mittels eines Lots auf Nickel-, Eisen-, Silber- oder Platin-Basis oder ähnlichem.

Vorzugsweise weist der Schichtstapel eine Aussparung, die sich teilweise in den Schichtstapel erstreckt, für die elektrische Durchführung bis zur Eindringtiefe auf, sodass die elektrische Durchführung die erste Lotschicht elektrisch kontaktiert, um die mit der ersten Lotschicht elektrisch kontaktierte Elektrode elektrisch zu kontaktieren. In bevorzugten Ausführungsformen durchdringt die Aussparung also die Isolationsschicht und die Metallisierungsschicht. Die Isolationsschicht und die Metallisierungsschicht umgeben also vorzugsweise die elektrische Durchführung radial, während die elektrische Durchführung vorzugsweise axial mit einem Ende der elektrischen Durchführung an der ersten Lotschicht anstößt. An der elektrischen Durchführung kann an einem dem Ende gegenüberliegenden weiteren Ende, das aus der Außenwand hervorragt, eine Verbindung zu einer Stromquelle bereitgestellt sein, beispielsweise ein Kabel oder eine Klemme.

Bevorzugt ist, dass die Vorrichtung dafür eingerichtet ist, durch die Öffnung hindurch den ersten Pol der Leiterbahn in dem Innenraum elektrisch zu kontaktieren. Vorzugsweise weist die Vorrichtung in der Außenwand einen weiteren Vorsprung mit der weiteren Öffnung auf, um den zweiten Pol der Leiterbahn in dem Innenraum elektrisch zu kontaktieren. Die weitere Öffnung ist vorzugsweise in einem weiteren radial nach außen abstehenden Vorsprung angeordnet, der insbesondere einstückig mit der Außenwand gebildet ist. Der weitere Vorsprung kann als weitere Sicke ausgebildet sein und nach einer der Ausführungsformen der voranstehend beschriebenen Sicke ausgebildet sein. Der erste Pol ist vorzugsweise der erste Pol der Leiterbahn, die insbesondere auf der Glattlage, die ein bevorzugter Leiterbahnträger ist, angeordnet ist. Der zweite Pol ist vorzugsweise der zweite Pol der Leiterbahn, die insbesondere auf der Glattlage angeordnet ist. Der erste Pol ist vorzugsweise der Plus-Pol. Der zweite Pol ist vorzugsweise der Minus-Pol. Der zweite Pol kann alternativ auch über die Außenwand, auch Vorrichtungsmantel genannt, elektrisch kontaktiert werden. Dann ist vorzugsweise der Auslauf der Glattlage zur Kontaktierung des Minus-Pols mit Lot zum Hartlöten zu versehen, welches dafür geeignet ist, Leiterbahn und Außenwand stoffschlüssig miteinander zu verbinden. So kann ein fester Kontakt zwischen Außenwand und Minus-Pol der Leiterbahn sichergestellt sein. Manche Ausführungsformen sehen vor, dass die Elektrode den ersten Pol kontaktiert. Einige Ausführungsformen sehen vor, dass eine weitere Elektrode, die wie Ausführungsformen der Elektrode ausgebildet sein kann, den zweiten Pol kontaktiert.

Besonders bevorzugt ist, dass die Vorrichtung in dem Innenraum die Elektrode und die weitere Elektrode aufweist und dafür eingerichtet ist, durch die Außenwand hindurch die Elektrode elektrisch zu kontaktieren, um je einen ersten Pol von zwei oder mehr der Leiterbahnen elektrisch zu kontaktieren, und dafür eingerichtet ist, durch die Außenwand hindurch die weitere Elektrode elektrisch zu kontaktieren, um je einen zweiten Pol der zwei oder mehr der Leiterbahnen elektrisch zu kontaktieren. Vorzugsweise ist die Elektrode in dem Vorsprung aufgenommen und die weitere Elektrode ist in dem weiteren Vorsprung aufgenommen.

In manchen Ausführungsformen sind die Elektrode und die weitere Elektrode in einem gemeinsamen Vorsprung aufgenommen und/oder durch dieselbe Öffnung in der Außenwand elektrisch kontaktiert. Vorzugsweise kontaktiert eine positive elektrische Durchführung die Elektrode elektrisch. Bevorzugt ist, dass eine negative elektrische Durchführung die weitere Elektrode elektrisch kontaktiert.

Bevorzugt ist, dass die Elektrode und die weitere Elektrode in dem Innenraum parallel zu einander angeordnet sind und sich mit im Wesentlichen gleichbleibendem Abstand zu der Außenwand erstrecken. So können der erste Pol und der zweite Pol jeweils sehr kompakt unmittelbar nebeneinander elektrisch kontaktiert werden.

Bevorzugt ist, dass die Vorrichtung in dem Innenraum einen oder mehrere der Leiterbahnträger aufweist, die jeweils eine der Leiterbahnen tragen. Vorzugsweise ist jeweils eine der Leiterbahnen auf einer Oberfläche eines jeweiligen Leiterbahnträgers angeordnet und auf der Oberfläche und der Leiterbahn ist vorzugsweise eine elektrisch isolierende Isolierbeschichtung gebildet, die an einer Kontaktfläche der Leiterbahn zum elektrischen Kontaktieren der Leiterbahn unterbrochen ist, um die Leiterbahn durch die Außenwand hindurch elektrisch zu kontaktieren. Bevorzugt ist, dass sich die Isolierbeschichtung auch zwischen Oberfläche des Leiterbahnträgers und der Leiterbahn erstreckt, um den Leiterbahnträger gegen die Leiterbahn elektrisch zu isolieren.

Vorzugsweise ist mindestens eine der Leiterbahnen dafür eingerichtet, eine in dem Innenraum angeordnete Heizeinrichtung zu betreiben. Vorzugsweise ist die Heizeinrichtung die Leiterbahn, die insbesondere auf der Glattlage angeordnet ist. Bevorzugt ist, dass die Leiterbahn auf der Glattlage mit der elektrisch isolierenden Isolierbeschichtung beschichtet ist, wobei in der Isolierbeschichtung eine Aussparung vorgesehen sind, um die Kontaktfläche der Leiterbahn freizulegen, an der die elektrische Kontaktierung der Leiterbahn mittels der Elektrode stattfindet. Für jede Kontaktfläche der Leiterbahn, insbesondere für jeden Pol der Leiterbahn, ist vorzugsweise eine separate Aussparung vorgesehen. Die Aussparungen sind vorzugsweise benachbart zu Enden der Glattlage angeordnet, da in der Regel die Enden Ausläufe der Glattlagen darstellen, die im montierten Zustand an der Elektrode anliegen. Die Leiterbahn als Heizeinrichtung verläuft vorzugsweise mäanderförmig oder zickzackförmig über den Leiterbahnträger. Vorzugsweise ist zwischen den Enden der Isolierbeschichtung und den Enden des Leiterbahnträgers, insbesondere der Folie der Glattlage, ein Abstand vorgesehen, der zudem frei von der Leiterbahn ist und der ebenfalls der Isolierung dient. Der Bereich des Abstandes, insbesondere an einer Stirnseite der Folie, ist für gewöhnlich dazu angeordnet, um im montierten Zustand von innen an der Außenwand der Vorrichtung anzustoßen. So kann ein elektrischer Kurzschluss des Leiterbahnträgers mit der Elektrode oder auch mit einer Innenseite der Außenwand verhindert werden.

In bevorzugten Ausführungsformen ist die Vorrichtung ein Katalysator, insbesondere ein flächig beheizbarer Katalysator. In diesen Ausführungsformen muss oft eine Vielzahl von Heizeinrichtungen, die vorzugsweise als Leiterbahnen auf den Leiterbahnträgern, insbesondere den Glattlagen, ausgeführt sind, von außerhalb der Vorrichtung durch die Außenwand hindurch elektrisch kontaktiert werden. Entsprechend vorteilhaft kann sich die vorliegende Erfindung also auswirken, weil insbesondere die Abdichtung verbessert oder vereinfacht ist.

Bevorzugt ist, dass mehrere Leiterbahnträger, insbesondere mehrere Folien, insbesondere mehrere Glattlagen und/oder mehrere Welllagen, ein Lagenpaket in dem Innenraum bilden. Bevorzugt ist, dass die Leiterbahnträger in einer gewickelten Anordnung in dem Innenraum angeordnet sind. Bevorzugt ist, dass Glattlagen und Welllagen abwechselnd angeordnet sind und jeweils benachbarte Glattlagen und Welllagen sich berühren. Vorzugsweise ist das Lagenpaket in einer bekannten S-Form gewickelt und das Lagenpaket ist derart in dem Innenraum aufgenommen, dass die Erstreckungsrichtung einer Wickelachse des Lagenpakets einer Erstreckungsrichtung der axialen Ausdehnung der Außenwand entspricht. In Ausführungsformen kann das Lagenpaket gekippt sein, sodass es von der Stirnseite aus betrachtet ein Parallelogramm bildet. Das bedeutet, in einer nicht-aufgerollten und somit flachen Form der gestapelten Lagen des Lagenpakets sind die Lagen zueinander parallelverschoben, sodass die Oberfläche der Stirnseite, die durch die Kanten der mehreren Glattlagen und/oder Welllagen gebildet ist, die Form eines Parallelogramms annimmt. Dann kann in Abhängigkeit eines Kippwinkels eine Länge des Lagenauslaufs in der gewickelten Form verkürzt sein. Dies ermöglicht, die Kontaktflächen der Leiterbahnen und die zugehörigen Kontaktbereiche der Elektrode klein zu halten oder auch die Elektrode zu verkürzen, insbesondere, wenn die Elektrode als Stromschiene ausgebildet ist. Ein bevorzugter Kippwinkel ist größer als 15°, nochmals bevorzugt größer als 30°. Ein bevorzugter Kippwinkel ist kleiner als 90°, nochmals bevorzugt kleiner als 80°. Der Kippwinkel liegt besonders vorzugsweise zwischen 40° und 80°. Besonders bevorzugte Kippwinkel können 50° und 75° sein. Der Lagenauslauf hat vorzugsweise eine Länge von weniger als 180°, nochmals bevorzugt weniger als 160°, nochmals bevorzugt weniger als 120°, nochmals bevorzugt weniger als 100° und besonders bevorzugt weniger als 90°, bezogen auf einen radialen Umfang einer kreiszylindrischen Außenwand. Beispielhafte bevorzugte Lagenausläufe haben Längen von zwischen 150° und 140°, insbesondere etwa 141°, oder von 110° bis 100°, insbesondere etwa 106°, bezogen auf den radialen Umfang der kreiszylindrischen Außenwand.

In manchen Ausführungsformen ist die Außenwand noch von einer Dichtungswand umgeben, die die Außenwand, die die Öffnung zum Innenraum aufweist, gegenüber der Umwelt abdichtet. In dieser geschlossenen Dichtungswand sind vorzugsweise gasdicht abgedichtete Durchführungsbohrungen für die elektrischen Durchführungen vorgesehen. So kann die Öffnung eine Größe aufweisen, die insbesondere bei Herstellung oder Wartung einen besonders leichten Zugriff auf den Innenraum erlaubt und trotzdem eine gute Dichtigkeit der Vorrichtung erreicht werden.

Vorzugsweise sind eine oder mehrere von Isolationsschicht, Isolierbereich und Isolierbeschichtung aus einem elektrisch isolierenden Werkstoff gebildet, der hochtemperaturbeständig ist, vorzugsweise hochtemperaturbeständig bis zu einer Temperatur von 1000° C. Der Werkstoff hat vorzugsweise eine oxidische Zusammensetzung und ist besonders vorzugsweise ein Aluminiumoxid, ein Titanoxid, ein Zirkonoxid oder ähnliches. Ein besonders bevorzugter Werkstoff hat eine Porosität von bevorzugt < 1%, nochmals bevorzugt eine Porosität von <0,1%, besonders bevorzugt eine Porosität von 0%. Der Werkstoff ist vorzugsweise mit einer Dicke zwischen 100 nmbis 10 µm vorgesehen. Vorzugsweise liegt die Dicke von einem oder mehreren von Isolationsschicht, Isolierbereich und Isolierbeschichtung also zwischen 100 nm bis 10 µm. Es versteht sich, dass Isolationsschicht, Isolierbereich und Isolierbeschichtung verglichen miteinander nicht alle aus gleichen Werkstoffen mit jeweils gleichen Dicken und Porositäten gebildet sein müssen und auch innerhalb jeder von Isolationsschicht, Isolierbereich und Isolierbeschichtung verschiedene Werkstoffe miteinander kombiniert sein können, solange jeweils die gewünschte elektrisch isolierende Wirkung erreicht wird. Die erfindungsgemäße Vorrichtung wird vorzugsweise durch die folgenden Schritte hergestellt: Zunächst wird der Vorsprung, insbesondere die Sicke, einstückig mit der Außenwand und weg von dem Innenraum mit einer gegebenen Breite und Tiefe zur Einbringung der Kontaktierung hergestellt. Dann wird die Öffnung, insbesondere die Bohrung, innerhalb des Vorsprungs hergestellt, um die elektrische Durchführung an die Elektrode zur Kontaktierung anschließen zu können, vorzugsweise zur Kontaktierung des Plus-Pols. Dann wird wahlweise der Minus-Pol entweder über die Außenwand oder eine analog zum Plus-Pol ausgeführte Elektrode, vorzugsweise innerhalb einer weiteren Sicke, kontaktiert. Bei Kontaktierung des Minus-Pols über die Außenwand ist bevorzugt, dass der Bereich des Lagenauslaufs des Minus-Pols mit Lot zum Hartlöten versehen wird, welches Leiterbahn und Außenwand stoffschlüssig miteinander verbindet. Dann wird vorzugsweise der Schichtstapel mit insbesondere der Isolationsschicht, der Metallisierungsschicht und der Elektrode innerhalb des Vorsprungs aufgebracht. Dabei wird bevorzugt die Schichtstärke der Elektrode an den erwarteten Stromfluss angepasst. Zudem wird vorzugsweise die Schichtstärke der Isolationsschicht an die erwartete maximale Spannung angepasst. Anschließend wird die Elektrode partiell mit Isolationsbereichen versehen, um Kurzschlüsse mit eventuell nicht isolierten Lagenenden bzw. deren Stirnseiten zu verhindern. Alternativ dazu kann insbesondere eine Isolation, wie eine Keramikisolation, auf die Lagenenden bzw. Stirnseiten der Lagen oder einen schmalen Abstand auf der Lagenrückseite im Bereich der Kontaktierung aufgebracht werden. Dabei ist vorzugsweise der isolierte Leiterbahnträger im Folienauslauf länger als die nicht isolierte Welllage, wobei allerdings normalerweise der Folienauslauf durch gleiche Lagenlänge alterniert. Dann wird die zweite Lotschicht auf die Kontaktbereiche der Elektrode aufgebracht. Schließlich wird eine entsprechende Matrix, die mit Leiterbahnen versehen ist, eingedrückt.

Im Folgenden werden beispielhafte Ausführungsformen der Erfindung, auf die die Erfindung allerdings nicht beschränkt ist, anhand der beigefügten schematischen Figuren beschrieben, in denen:
- Fig. 1: einen Querschnitt durch eine erste Ausführungsform der erfindungsgemäßen Vorrichtung zeigt;
- Fig. 2: eine Elektrode der Vorrichtung gemäß der ersten Ausführungsform in einer Aufsicht zeigt;
- Fig. 3: eine Leiterbahn auf einem Leiterbahnträger der Vorrichtung gemäß der ersten Ausführungsform in einer Aufsicht zeigt;
- Fig. 4: eine Querschnittsansicht entlang einer axialen Blickrichtung der Vorrichtung gemäß der ersten Ausführungsform zeigt;
- Fig. 5: eine weitere Querschnittsansicht entlang der axialen Blickrichtung der Vorrichtung gemäß der ersten Ausführungsform zeigt; und
- Fig. 6: eine Querschnittsansicht entlang der axialen Blickrichtung der Vorrichtung gemäß einer zweiten Ausführungsform zeigt.

In der folgenden detaillierten Beschreibung von Ausführungsformen, die sich auf die beigefügten Figuren bezieht, und in den beigefügten Patentansprüchen sind Bezugszeichen eingeführt worden, um die Lesbarkeit zu verbessern. Die Bezugszeichen sollen keine einschränkende Wirkung haben. Weiterhin können alle Merkmale, die im allgemeinen Teil der Beschreibung und in der folgenden detaillierten Beschreibung genannt sind, auch zwischen den veranschaulichenden, beispielhaften Ausführungsformen untereinander, miteinander kombiniert werden, um neue Ausführungsbeispiele gemäß der Erfindung zu bilden, sofern die kombinierten Merkmale sich nicht gegenseitig technisch ausschließen oder ihre Kombination nicht explizit ausgeschlossen wird.

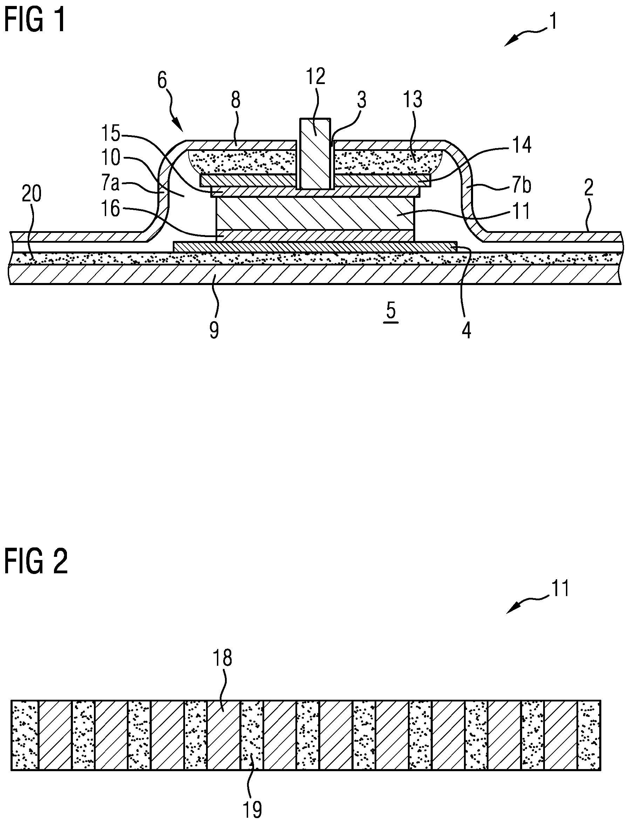

Fig. 1 zeigt einen Querschnitt durch eine erste Ausführungsform der erfindungsgemäßen Vorrichtung 1. Die Vorrichtung 1 ist eine Vorrichtung zur Abgasbehandlung, hier genauer gesagt ein flächig beheizbarer Katalysator, wie im Folgenden deutlicher werden wird.

Die Vorrichtung 1 weist eine Außenwand 2 auf. Die Außenwand 2 weist eine Öffnung 3 auf, um eine Leiterbahn 4, die innerhalb eines von der Außenwand 2 umgebenen Innenraums 5 angeordnet ist, durch die Außenwand 2 hindurch elektrisch zu kontaktieren. Im vorliegenden Ausführungsbeispiel ist die Außenwand 2 kreiszylindrisch geformt, wobei die kreiszylindrische Krümmung der Außenwand 2 in Fig. 1 zur Vereinfachung nicht dargestellt ist. Eine Symmetrieachse der kreiszylindrischen Außenwand 2 verläuft entlang der Blickrichtung der Darstellung in Fig. 1.

Die Öffnung 3 ist in einem vom Innenraum 5 nach außen abstehenden Vorsprung 6 angeordnet, der einstückig mit der Außenwand 2 gebildet ist. So kann der Vorsprung 6 eine separate, angeschweißte Hülse, wie sie aus dem Stand der Technik bekannt ist, ersetzen. Genauer gesagt ist der Vorsprung 6 als eine Sicke in der Außenwand 2 gebildet. Die Blickrichtung in Fig. 1 ist entlang einer longitudinalen Erstreckungsrichtung der Sicke. Die Sicke erstreckt sich also in Umfangsrichtung um die Außenwand 2. Die Sicke ist durch zwei parallele Seitenwände 7a, 7b und eine dazu im Wesentlichen senkrecht ausgerichtete Deckwand 8 gebildet, die die beiden Seitenwände 7a, 7b miteinander verbindet. Die Deckwand 8 verläuft parallel zur übrigen Außenwand 2, die seitlich an die Seitenwände 7a, 7b angrenzt. Die beiden Seitenwände 7a, 7b verlaufen im Wesentlichen senkrecht zur Deckwand 8. In der Deckwand 8 ist zentral die Öffnung 3 als Bohrung gebildet.

Der Vorsprung bildet zwischen der Außenwand 2 und einem Leiterbahnträger 9, der die Leiterbahn 4 trägt, innerhalb des Innenraums 4 einen Hohlraum 10 aus. Der Hohlraum 10 befindet sich, genauer gesagt, zwischen der Deckwand 8, den beiden Seitenwänden 7a, 7b und dem Leiterbahnträger 9. In dem Hohlraum 10 ist zwischen der Öffnung 3 und dem Leiterbahnträger 9 eine Elektrode 11 angeordnet, um die Leiterbahn 4 zu kontaktieren.

In Fig. 1 ist gezeigt, dass genau eine elektrische Durchführung 12 die Öffnung 3 durchtritt und elektrisch mit der Elektrode 11 verbunden ist. Die elektrische Durchführung 12 ist dafür angeordnet, die Elektrode 11 von außerhalb der Außenwand 2 durch die Öffnung 3 hindurch elektrisch zu kontaktieren. Der Vorsprung 6 nimmt einen Schichtstapel auf, in diesem Ausführungsbeispiel in dem Hohlraum 10. In dem Schichtstapel ist die Elektrode 11 angeordnet. Die elektrische Durchführung 12 dringt in eine Eindringtiefe in den Schichtstapel ein, um die Elektrode 11 elektrisch zu kontaktieren.

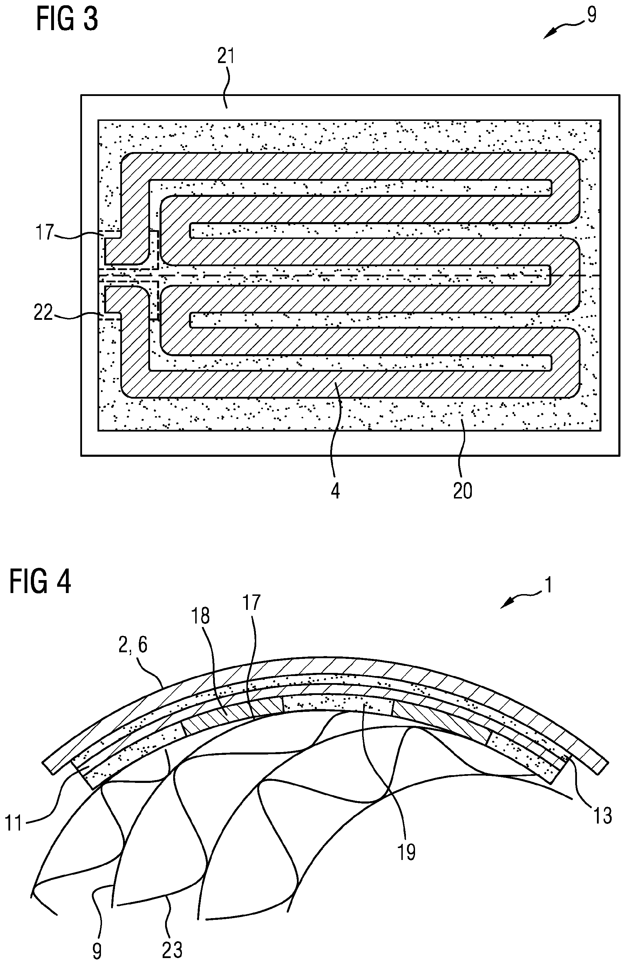

Der Schichtstapel besteht aus, beginnen an der Deckwand 8, einer Isolationsschicht 13 zur elektrischen Isolierung der Außenwand 2 gegen die Elektrode 11, einer Metallisierungsschicht 14, einer ersten Lotschicht 15, der Elektrode 11 und einer zweiten Lotschicht 16. Die elektrische Durchführung 12 durchläuft die Isolationsschicht 13 und die Metallisierungsschicht 14 und ist stoffschlüssig mit der ersten Lotschicht 15 verbunden. Die erste Lotschicht 15 ist wiederum stoffschlüssig elektrisch mit der Elektrode 11 verbunden. Die zweite Lotschicht 16 verbindet die Elektrode 11 stoffschlüssig elektrisch mit der Leiterbahn 4, hier genauer gesagt mit einer in Fig. 4 gezeigten ersten Kontaktfläche 17 der Leiterbahn 4, die unten noch genauer beschrieben wird. Die Eindringtiefe reicht also durch die Isolationsschicht 13 und die Metallisierungsschicht 14 hindurch bis zur ersten Lotschicht 15. Somit umgeben die Isolationsschicht 13 und die Metallisierungsschicht 14 die elektrische Durchführung 12 radial.

Fig. 2 zeigt die Elektrode 11 in einer Aufsicht gemäß der ersten Ausführungsform der Vorrichtung 1. Die Aufsicht zeigt eine Seite der Elektrode 11, die dem Innenraum 5 zugewandt ist. Die elektrische Kontaktierung der Elektrode 11 durch die Außenwand 2 hindurch erfolgt auf einer gegenüberliegenden Seite, die dem Innenraum 5 abgewandt ist. Die Elektrode 11 ist als Stromschiene ausgebildet, in diesem Beispiel als streifenförmige Stromschiene. Auf der Elektrode 11 sind mehrere Kontaktbereiche 18 bereitgestellt. Auf der Elektrode 11 sind mehrere Isolierbereiche 19 bereitgestellt. Die Isolierbereiche 18 sind den Kontaktbereichen 18 zwischengeordnet, sodass sich entlang der Elektrode 11 je ein Kontaktbereich 18 mit einem Isolierbereich 19 abwechselt. Hier sind beispielhaft zehn Kontaktbereiche 18 bereitgestellt, sodass zehn Leiterbahnen 4 durch die Elektrode 11 kontaktiert werden können. Sind mehr oder weniger Leiterbahnen 4 elektrisch zu kontaktieren, können aber auch entsprechend mehr oder weniger Kontaktbereiche 18 bereitgestellt sein. Bevorzugt ist allerdings, dass jeder Leiterbahn 4 genau ein Kontaktbereich 18 zugeordnet ist und die Anzahl der auf der Elektrode 11 bereitgestellten Kontaktbereiche 18 mit der Anzahl der elektrisch zu kontaktierenden Leiterbahnen 4 übereinstimmt. Aus Gründen der Vereinfachung sind in Fig. 2 nur ein Kontaktbereich 18 und nur ein dem Kontaktbereich 18 benachbarter Isolierbereich 19 mit Bezugszeichen versehen.

Fig. 3 zeigt eine Leiterbahn 4 auf einem Leiterbahnträger 9 der Vorrichtung 1 gemäß der ersten Ausführungsform in einer Aufsicht. Genauer zeigt Fig. 3 einen von mehreren Leiterbahnträgern 9, die in der Vorrichtung 1 installiert sind. Der Leiterbahnträger 9 bildet eine Glattlage des Katalysators. Auf dem Leiterbahnträger 9 ist eine Leiterbahn 4 aufgebracht, die mäanderförmig über den Leiterbahnträger verläuft. Eine Isolierbeschichtung 20 ist auf der Leiterbahn 4 aufgebracht und bedeckt einen großen Teil des Leiterbahnträgers 9. Die Isolierbeschichtung 20 erstreckt sich auch zwischen der Leiterbahn 4 und dem Leiterbahnträger 9, um den Leiterbahnträger 9 gegenüber der Leiterbahn 4 elektrisch zu isolieren. Ein Abstand 21 ist zwischen Rand der Isolierbeschichtung 20 und Rand des Leiterbahnträgers 9 freigelassen. In dem Abstand 21 befindet sich weder die Isolierbeschichtung 20 noch die Leiterbahn 4. Somit kann der Abstand 21 als zusätzliche elektrische Isolierung dienen, beispielsweise falls der Abstand 21 im montierten Zustand des Leiterbahnträgers 9 in der Vorrichtung 1 beispielsweise an der Elektrode 11 oder von innen an der Außenwand 2 anstößt.

An einem ersten Endbereich der Leiterbahn 4, der einen Plus-Pol der Leiterbahn 4 bildet, ist die erste Kontaktfläche 17 gebildet. Die erste Kontaktfläche 17 ist dadurch gebildet, dass eine erste Ausnehmung in der Isolierbeschichtung 20 gebildet ist, die den ersten Endbereich der Leiterbahn 4 freilegt. An einem zweiten Endbereich der Leiterbahn 4, der einen Minus-Pol der Leiterbahn 4 bildet, ist eine zweite Kontaktfläche 22 gebildet. Die zweite Kontaktfläche 22 ist dadurch gebildet, dass eine zweite Ausnehmung in der Isolierbeschichtung 20 gebildet ist, die den zweiten Endbereich freilegt. So ist sichergestellt, dass eine elektrische Kontaktierung der Leiterbahn 4 nur in den beiden Endbereichen der Leiterbahn 4 stattfinden kann. Einer der Kontaktbereiche 18 der Elektrode 11 ist dafür angeordnet, mit der ersten Kontaktfläche 17 in Kontakt zu stehen, um die Leiterbahn 4 durch die Öffnung 3 in der Außenwand 2 über die elektrische Durchführung 12 elektrisch zu verbinden. Die Vorrichtung 1 ist also dafür eingerichtet, durch die Öffnung 3 hindurch den ersten Pol der Leiterbahn 4 in dem Innenraum 5 elektrisch zu kontaktieren. In einer nicht gezeigten Ausführungsform weist die Vorrichtung 1 in der Außenwand 2 einen weiteren Vorsprung, insbesondere eine weitere Sicke, mit einer weiteren Öffnung auf, um den zweiten Pol der Leiterbahn 4 in dem Innenraum 2 elektrisch zu kontaktieren. Dieser kann dann beispielsweise über eine weitere Elektrode in der weiteren Sicke elektrisch kontaktiert werden. In der weiteren Sicke kann ein weiterer Schichtstapel, wie oben beschrieben, vorhanden sein. Um Wiederholungen zu vermeiden, wird hinsichtlich des weiteren Vorsprungs, der weiteren Elektrode und des weiteren Schichtstapels auf die obigen Ausführungen zu dem Vorsprung 6, der Elektrode 11 und des Schichtstapels verwiesen. In einer nicht gezeigten Ausführungsform verläuft die weitere Sicke parallel zu der Sicke entlang der Umfangsrichtung der Außenwand 2 und/oder die weitere Elektrode verläuft entlang der Umfangsrichtung der Außenwand 2 parallel zu der Elektrode 11.

Die in Fig. 3 gezeigte Leiterbahn 4 ist dafür eingerichtet, eine in dem Innenraum 2 angeordnete Heizeinrichtung zu betreiben. Genauer gesagt ist die Leiterbahn 4 hier die Heizeinrichtung und hat einen elektrischen Widerstand, der den Leiterbahnträger 9 bei Stromfluss durch die Leiterbahn 4, zwischen dem ersten Pol und dem zweiten Pol, erhitzt. Es wird also die Glattlage flächig beheizt. Deshalb ist die Vorrichtung 1 ein flächig beheizbarer Katalysator.

Fig. 4 zeigt eine Querschnittsansicht entlang einer axialen Blickrichtung der Vorrichtung 1, entlang der Symmetrieachse der zylindrischen Außenwand 2. Der Querschnitt verläuft dabei parallel zu den beiden Seitenwänden 7a, 7b durch den Vorsprung 6, jedoch versetzt zu der elektrischen Durchführung 12, sodass diese in Fig. 4 nicht zu sehen ist. Die Elektrode 11 ist als gekrümmte Stromschiene ausgeführt, die eine Krümmung aufweist, die einer Krümmung der Außenwand 2 entspricht. Somit folgt die Elektrode 11 der Außenwand 2 in gleichbleibendem Abstand. Der gesamte, oben beschriebene Schichtstapel folgt dem Verlauf der Außenwand 2 ringförmig. Die Vorrichtung 1 umfasst eine Vielzahl von Leiterbahnträgern 9, die hier als Glattlagen ausgeführt sind. Die Leiterbahnträger 9 sind abwechselnd mit Welllagen 23 angeordnet. Die Welllagen 23 tragen im gezeigten Ausführungsbeispiel in Fig. 4 keine Leiterbahnen 4, können in anderen Ausführungsformen aber auch Leiterbahnträger 9 sein, zusätzlich zu den oder statt der Glattlagen. Mit Bezugszeichen sind beispielhaft nur je ein Leiterbahnträger 9, also eine Glattlage, und eine daran angrenzende Welllage 23 gekennzeichnet. Es ist jedoch offensichtlich, dass das abschnittsweise dargestellte gewickelte Lagenpaket eine Vielzahl von abwechselnd angeordneten Leiterbahnträgern 9 und Welllagen 23 aufweist. Die erste Kontaktfläche 17 jedes Leiterbahnträgers 9 berührt jeweils einen der Kontaktbereiche 18 der Elektrode 11. Isolierte Enden von Auslaufbereichen der Leiterbahnträger 9 und Auslaufbereiche der Welllagen 23 berühren Isolierbereiche 19 der Elektrode 11. So erfolgt eine elektrische Kontaktierung nur zwischen den ersten Kontaktflächen 17 der jeweiligen Leiterbahnen 4 und den zugeordneten Kontaktbereichen 18 der Elektrode 11. Nicht in Fig. 4 zu erkennen, aber leicht vorstellbar ist, dass die elektrische Kontaktierung der zweiten Kontaktflächen 22, die in Fig. 3 gezeigt sind, also des Minus-Pols der Leiterbahn 4, in einer weiteren Sicke parallel zum als Sicke ausgeführten Vorsprung 6 stattfindet, ganz analog zur Darstellung in Fig. 4 hinsichtlich der ersten Kontaktflächen 17 jeder Leiterbahn 4. Die weitere Sicke verläuft also, wie der Vorsprung 6, in Umfangsrichtung der Außenwand 2 ringförmig um die Außenwand 2 und ist ebenfalls einstückig mit ihr ausgeführt, ohne dass es einem Verbindungsmaterial, z.B. einer Schweißnaht, zwischen der weiteren Sicke und der Außenwand 2 bedarf.

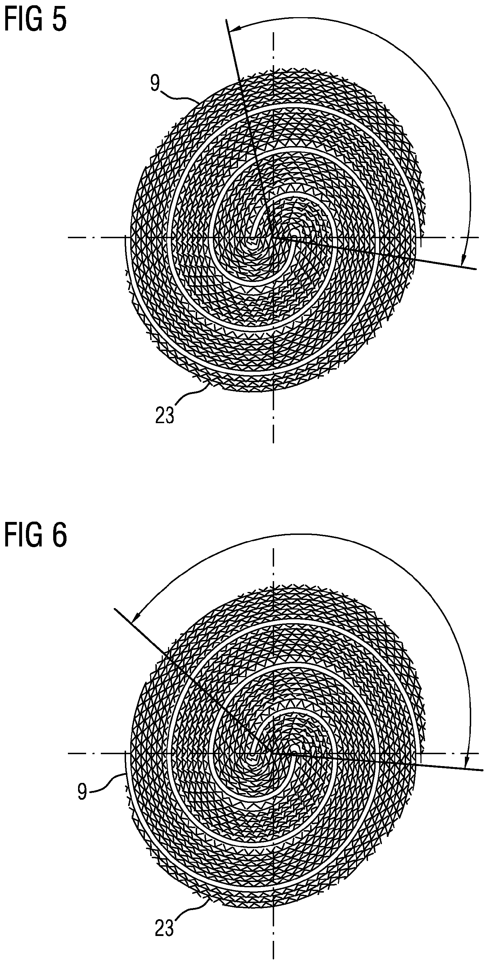

Fig. 5 zeigt eine weitere Querschnittsansicht entlang der axialen Blickrichtung der Vorrichtung 1 gemäß der ersten Ausführungsform. Genauer zeigt Fig. 5 nun das Lagenpaket aus Leiterbahnträgern 9 und Welllagen 23 veranschaulichend entlang einer Wickelachse des Lagenpakets. Für die in den Fig. 1-4 veranschaulichte Vorrichtung kommt eine Wicklung in S-Form gemäß Fig. 5 zum Einsatz. Die Erstreckungsrichtung der Wickelachse des Lagenpakets entspricht einer Erstreckungsrichtung der axialen Ausdehnung der Außenwand 2. Das Lagenpaket ist gekippt, sodass es, im nicht gewickelten, flachen Zustand, von der Stirnseite aus betrachtet ein Parallelogramm bildet. Die Lagen sind also zueinander verschoben angeordnet. Ein Grad der Verschiebung bestimmt eine Länge eines Lagenauslaufs. Hier beträgt beispielhaft der Kippwinkel, der am nicht gewickelten Lagenpaket messbar ist, 75° und die Länge des Lagenauslaufs beträgt 120,6 mm oder, als radialer Umfangswinkel der Außenwand 2 ausgedrückt, 106,3°. So können die jeweiligen ersten Kontaktflächen 17 der Leiterbahnen 9 und die zugehörigen Kontaktbereiche 18 der Elektrode 11 kleingehalten werden oder auch die Länge der Elektrode 11 kurzgehalten werden.

Fig. 6 zeigt eine Querschnittsansicht entlang der axialen Blickrichtung der Vorrichtung 1 gemäß einer zweiten Ausführungsform. Gezeigt ist ein Lagenpaket aus Leiterbahnträgern 9 und Welllagen 23, das einen alternativen Kippwinkel aufweist, veranschaulichend entlang einer Wickelachse des Lagenpakets . Für einige nicht gezeigte Ausführungsformen der Erfindung kommt die Wicklung in S-Form gemäß Fig. 6 zum Einsatz. Sie ersetzt dann einfach die Wicklung gemäß Fig. 5, unter Anpassung der Elektrode 11 und weiterer, von der Länge des Lagenauslaufs abhängiger Elemente. Die Erstreckungsrichtung der Wickelachse des gezeigten Lagenpakets entspricht wieder der Erstreckungsrichtung der axialen Ausdehnung der Außenwand 2. Das Lagenpaket ist wieder gekippt, sodass es, im nicht gewickelten, flachen Zustand, von der Stirnseite aus betrachtet das Parallelogramm bildet. Die Lagen sind also erneut zueinander verschoben angeordnet. Hier beträgt beispielhaft der Kippwinkel, der am nicht gewickelten Lagenpaket messbar ist, allerdings 50° und die Länge des Lagenauslaufs beträgt 160,7 mm oder, als radialer Umfangswinkel der Außenwand 2 ausgedrückt, 141,6°. So kann der Lagenauslauf über eine größere Strecke gestreckt werden, was je nach Anwendung vorteilhaft sein kann. Weitere Kippwinkel sind möglich und je nach Anwendungsfall vorteilhaft.

Die Erfindung erlaubt also, flächige Heizelemente, wie zum Beispiel Heizfolien, die in einen Katalysator eingebracht wurden, vereinfacht zu kontaktieren. Insbesondere können herkömmlich elektrisch beheizbare Katalysatoren, die metallische Blechlagen umfassen, die elektrisch isoliert an einem Stützsubstrat angeordnet sind, in nicht gezeigten Ausführungsformen in vergleichbarer Weise wie die gezeigten Leiterbahnen 4 kontaktiert werden. Somit kann sowohl die Plus-, als auch die Minus-Kontaktierung an der gleichen radialen Position abgegriffen werden. Die Kontaktierung aller Kontaktflächen 17, 22 der Leiterbahnen 4 kann also zentral mittels Elektrode 11, für die Plus-Pole, bzw. der weiteren Elektrode für die Minus-Pole der Leiterbahnen 4 erfolgen. Daraus folgt ein einfacher, zentraler elektrischer Anschluss der Leiterbahnen 4 mittels der elektrischen Durchführung 12, insbesondere eines mittels Leiterbahnen 4 flächig beheizbaren Katalysators. Es ergibt sich eine gesteigerte Zugänglichkeit und ein geringerer benötigter Bauraum.

## Patentansprüche

1. Vorrichtung (1) zur elektrischen Kontaktierung für einen elektrisch beheizten Katalysator in einer Abgasanlage für ein Kraftfahrzeug mit einem Verbrennungsmotor zur Abgasbehandlung, die eine Außenwand (2) aufweist, die eine Öffnung (3) aufweist, um eine oder mehrere Leiterbahnen (4), die innerhalb eines von der Außenwand (2) umgebenen Innenraums (5) angeordnet sind, durch die Außenwand (2) hindurch elektrisch zu kontaktieren, wobei die Öffnung (3) in einem von dem Innenraum (5) nach außen abstehenden Vorsprung (6) angeordnet ist, der einstückig mit der Außenwand (2) gebildet ist, wobei der Vorsprung (6) einen Hohlraum (10) zwischen der Außenwand (9) und einem Leiterbahnträger (9) innerhalb des Innenraums (2) ausbildet und in dem Hohlraum (10) zwischen der Öffnung (3) und dem Leiterbahnträger (9) eine Elektrode (11) angeordnet ist, um die eine oder die mehreren Leiterbahnen (4) elektrisch zu kontaktieren, **dadurch gekennzeichnet, dass** die elektrische Kontaktierung mehrere der Leiterbahnen (4) aufweist und auf der Elektrode (11) nebeneinander mehrere elektrisch leitfähige Kontaktbereiche (18) bereitgestellt sind, von denen jeweils einer der Kontaktbereiche (18) jeweils einer der mehreren Leiterbahnen (4) zur elektrischen Kontaktierung zugeordnet ist, wobei den mehreren Kontaktbereichen (18) auf der Elektrode (11) jeweils ein Isolierbereich (19) zwischengeordnet ist.

2. Vorrichtung (1) nach Anspruch 1, **dadurch gekennzeichnet, dass** der Vorsprung (6) als eine Sicke in der Außenwand (2) gebildet ist.

3. Vorrichtung (1) nach einem der vorhergehenden Ansprüche, **dadurch gekennzeichnet, dass** die Elektrode (11) als Stromschiene ausgebildet ist, die sich entlang mindestens eines Abschnitts der Außenwand (2) erstreckt, um mehrere der Leiterbahnen (4) zu kontaktieren.

4. Vorrichtung (1) nach einem der vorhergehenden Ansprüche, **dadurch gekennzeichnet, dass** genau eine elektrische Durchführung (12) die Öffnung (3) durchtritt und elektrisch mit der Elektrode (11) verbunden ist und dafür angeordnet ist, die Elektrode (11) von außerhalb der Außenwand (2) durch die Öffnung (3) hindurch elektrisch zu kontaktieren.

5. Vorrichtung (1) nach Anspruch 4, **dadurch gekennzeichnet, dass** der Vorsprung (6) einen Schichtstapel aufnimmt, in dem die Elektrode (11) angeordnet ist, und die elektrische Durchführung (12) in eine Eindringtiefe in den Schichtstapel eindringt, um die Elektrode (11) elektrisch zu kontaktieren.

6. Vorrichtung (1) nach einem der vorstehenden Ansprüche, **dadurch gekennzeichnet, dass** die Vorrichtung (1) dafür eingerichtet ist, durch die Öffnung (3) hindurch einen ersten Pol der Leiterbahn (4) in dem Innenraum (5) elektrisch zu kontaktieren und die Vorrichtung (1) in der Außenwand (2) einen weiteren Vorsprung mit einer weiteren Öffnung aufweist, um einen zweiten Pol der Leiterbahn (4) in dem Innenraum (5) elektrisch zu kontaktieren.

7. Vorrichtung (1) nach einem der vorstehenden Ansprüche, **dadurch gekennzeichnet, dass** mindestens eine der Leiterbahnen (4) dafür eingerichtet ist, eine in dem Innenraum (5) angeordnete Heizeinrichtung zu betreiben.

8. Vorrichtung (1) nach einem der vorstehenden Ansprüche, **dadurch gekennzeichnet, dass** die Vorrichtung (1) ein flächig beheizbarer Katalysator ist.

## Claims

1. Device (1) for electrical contacting for an electrically heated catalytic converter in an exhaust system for a motor vehicle having an internal combustion engine for treating exhaust gases, which device has an outer wall (2) which has an opening (3) in order to electrically contact one or more conductor tracks (4), which are arranged within an interior space (5) that is surrounded by the outer wall (2), through the outer wall (2), wherein the opening (3) is arranged in a projection (6) which protrudes outward from the interior space (5) and is integrally formed with the outer wall (2), wherein the projection (6) forms a cavity (10) between the outer wall (9) and a conductor track carrier (9) within the interior space (2) and, in the cavity (10), an electrode (11) is arranged between the opening (3) and the conductor track carrier (9) in order to electrically contact the one or the plurality of conductor tracks (4), **characterized in that** the electrical contacting involves a plurality of the conductor tracks (4) and a plurality of electrically conductive contact regions (18) are provided next to one another on the electrode (11), in each case one of the contact regions (18) of which is associated with in each case one of the plurality of conductor tracks (4) for electrical contacting, wherein an insulating region (19) is respectively interposed between the plurality of contact regions (18) on the electrode (11).

2. Device (1) according to Claim 1, **characterized in that** the projection (6) is formed as a bead in the outer wall (2).

3. Device (1) according to either of the preceding claims, **characterized in that** the electrode (11) is designed as a busbar which extends along at least one portion of the outer wall (2) in order to contact a plurality of the conductor tracks (4).

4. Device (1) according to one of the preceding claims, **characterized in that** precisely one electrical bushing (12) passes through the opening (3) and is electrically connected to the electrode (11) and is arranged for the electrode (11) to be electrically contacted from outside the outer wall (2) through the opening (3).

5. Device (1) according to Claim 4, **characterized in that** the projection (6) receives a layer stack in which the electrode (11) is arranged, and the electrical bushing (12) penetrates the layer stack to a penetration depth in order to electrically contact the electrode (11) .

6. Device (1) according to one of the preceding claims, **characterized in that** the device (1) is designed for electrically contacting a first pole of the conductor track (4) in the interior space (5) through the opening (3), and the device (1) has, in the outer wall (2), a further projection with a further opening in order to electrically contact a second pole of the conductor track (4) in the interior space (5).

7. Device (1) according to one of the preceding claims, **characterized in that** at least one of the conductor tracks (4) is designed to operate a heater which is arranged in the interior space (5).

8. Device (1) according to one of the preceding claims, **characterized in that** the device (1) is a catalytic converter which can be areally heated.

## Revendications

1. Dispositif (1) de mise en contact électrique pour un convertisseur catalytique chauffé électriquement dans un système d'échappement pour un véhicule automobile pourvu d'un moteur à combustion interne pour le traitement des gaz d'échappement, présentant une paroi extérieure (2) qui présente une ouverture (3) pour la mise en contact électrique, à travers la paroi extérieure (2), d'une ou de plusieurs pistes conductrices (4) qui sont disposées dans un espace intérieur (5) entouré par la paroi extérieure (2), dans lequel l'ouverture (3) est disposée dans une saillie (6) dépassant de l'espace intérieur (5) vers l'extérieur et qui est formée d'un seul tenant avec la paroi extérieure (2), dans lequel la saillie (6) réalise une cavité (10) entre la paroi extérieure (9) et un support de piste conductrice (9) dans l'espace intérieur (2), et une électrode (11) est disposée dans la cavité (10) entre l'ouverture (3) et le support de piste conductrice (9) pour la mise en contact électrique de ladite une ou des plusieurs pistes conductrices (4),
**caractérisé en ce que** la mise en contact électrique présente plusieurs des pistes conductrices (4), et plusieurs zones de contact (18) électriquement conductrices sont fournies côte à côte sur l'électrode (11), dans lequel respectivement l'une des zones de contact (18) est associée respectivement à l'une des plusieurs pistes conductrices (4) pour la mise en contact électrique, dans lequel respectivement une zone d'isolation (19) est intercalée entre les plusieurs zones de contact (18) sur l'électrode (11).

2. Dispositif (1) selon la revendication 1, **caractérisé en ce que** la saillie (6) est formée sous forme de moulure dans la paroi extérieure (2).

3. Dispositif (1) selon l'une quelconque des revendications précédentes, **caractérisé en ce que** l'électrode (11) est réalisée sous la forme d'une barre conductrice qui s'étend le long d'au moins une partie de la paroi extérieure (2) pour la mise en contact de plusieurs des pistes conductrices (4).

4. Dispositif (1) selon l'une quelconque des revendications précédentes, **caractérisé en ce que** précisément un seul passage électrique (12) traverse l'ouverture (3) et est relié électriquement à l'électrode (11) et est conçu pour la mise en contact électrique de l'électrode (11) depuis l'extérieur de la paroi extérieure (2) à travers l'ouverture (3).

5. Dispositif (1) selon la revendication 4, **caractérisé en ce que** la saillie (6) reçoit un empilement de couches dans lequel est disposée l'électrode (11), et le passage électrique (12) pénètre dans l'empilement de couches jusqu'à une profondeur de pénétration pour la mise en contact électrique de l'électrode (11).

6. Dispositif (1) selon l'une quelconque des revendications précédentes, **caractérisé en ce que** le dispositif (1) est aménagé pour la mise en contact électrique à travers l'ouverture (3) d'un premier pôle de la piste conductrice (4) dans l'espace intérieur (5), et le dispositif (1) présente dans la paroi extérieure (2) une autre saillie pourvue d'une autre ouverture pour la mise en contact électrique d'un deuxième pôle de la piste conductrice (4) dans l'espace intérieur (5).

7. Dispositif (1) selon l'une quelconque des revendications précédentes, **caractérisé en ce qu'**au moins l'une des pistes conductrices (4) est aménagée pour faire fonctionner un dispositif de chauffage disposé dans l'espace intérieur (5).

8. Dispositif (1) selon l'une quelconque des revendications précédentes, **caractérisé en ce que** le dispositif (1) est un convertisseur catalytique pouvant être chauffé sur toute la surface.
